# EUROPEAN PATENT SPECIFICATION

(11) **EP 3 996 848 B1**
(45) Date of publication and mention of the grant of the patent: **01.04.2026**
(21) Application number: 20747111.1
(22) Date of filing: 06.07.2020
(51) Int. Cl.: B02C 13/04, B02C 13/28, B02C 13/282, B02C 13/284

(54) **PROCESS AND APPARATUS FOR GRINDING HETEROGENEOUS MATRICES**
VERFAHREN UND VORRICHTUNG ZUR ZERKLEINERUNG VON HETEROGENEN MATRIZEN
PROCÉDÉ ET DISPOTIF POUR BROYER DES MATRICES HÉTÉROGÈNES

(30) Priority: 10.07.2019 IT 201900011376
(43) Date of publication of application: 18.05.2022
(73) Proprietor: ITEA S.p.A., 20122 Milano (MI) (IT)
(72) Inventor: LA PIETRA, Giuseppe, 83018 San Martino Valle Caudina (AV) (IT); DI SALVIA, Grazia, 40125 Bologna (BO) (IT); MALAVASI, Massimo Pietro, 20121 Milano (MI) (IT); MOIOLI, Edoardo, 20900 Monza (MB) (IT); BASSIGNANO, Alvise Achille, 00162 Roma (RM) (IT)
(74) Representative: Conversano, Gabriele
(86) International application number: PCT/IB2020/056340
(87) International publication number: WO 2021/005490

(56) References cited:
- WO-A1-2012/117307
- CN-U- 205 253 229
- JP-A- H05 138 054
- US-A- 1 580 620

## Description

### Technical field

The present invention relates to a process to prepare, starting from heterogeneous matrices of plastic and fragile materials, ground materials with maximum desired particle size, as well as a device optimized to implement such process.

In particular, as a way of example and without this limiting the aims of the invention, it is to be said that the process and the device, object of the invention, can be optimized to obtain a ground material with maximum particle size lower than 3 mm and weighted average of the obtained particles lower than 1 mm, with high productivity per hour and with specific reduced energy consumption, starting from heterogeneous matrices of plastic and fragile materials.

### State of the art

At the state of the art, the problem of grinding heterogeneous materials in order to reduce their average sizes is well known. In particular, owing to the respective technical problems linked to grinding, it is known that materials are divided in fragile materials (with high Young's modulus) and plastic and fibrous materials (with low Young's modulus).

As it is well known, the Young's modulus describes the behavior of a material subject to deformation. Generally, it is well known that, by subjecting a material to an ever increasing stress, the deformation of the same is proportional to the stress at first (field of linear elastic deformations), and in the following, beyond a threshold dependent on the material examined (yield threshold), the deformation ends to be proportional to the stress and increases more than proportionally with respect to the same (field of plastic deformations), up to break the material.

The constant of proportionality between stress and deformation (Young's modulus), the yield threshold value and the deformation quantity that the material can absorb after yield and before being broken are specific features of each material.

For what pertains to the grinding problem, generally it is known that materials with high Young's modulus (with values typically between 10⁴ MPa and 10⁵ MPa and higher) are subjected to little deformations also after high stresses, and generally reach the material breaking at stress values little higher than the yield threshold.

These materials are commonly indicated as "fragile" materials. Since, as it is known the deformation work needed to reach material breaking is proportional to the area described by the curve of stress-deformation points between zero stress and breaking, and since in case of fragile materials such area is reduced, generally the fragile materials require low work to reach breaking.

The materials with low Young's module (with value lower than 10⁴ MPa) have high deformations also when subjected to contained stresses, and generally, when the yield threshold is passed, they are able to absorb ever increasing deformations, also after reduced stress increases. Breaking occurs only after high deformations (also in the order of tens of millimeters). In these cases, the material is commonly identified as "plastic", and since it is proportional to the area described by the curve stress-deformation up to breaking, the deformation work is sensibly higher than in case of fragile materials.

After this brief introduction, by analyzing the grinding devices known at the state of the art, it is to be noted that the same are distinguished by the modalities of energy transfer from the device to the mass, the dimensions of which are to be reduced.

In case of fragile materials, power is transferred to material as kinetic energy by means that compress the material abruptly by means of impacts. Said means are generally integral to a rotating element, and cause impacts on respective static (stator) organs. Mills of the type known at the state of the art function according to this principle, as for example crushing mills, reel mills and hammer mills.

Mills of the just described type are known with the most different geometrical shapes, yet all referable to the principle of providing a little stress locally between opposed grinding means.

According to another implementation of the same principle, the mills can comprise mobile organs, as rods or balls, which receive kinetic energy by the rotation of the grinding chamber case, or by the rotation of an inner rotor element which moves the mobile organs: it is the case of mills known as balls mills or rod mills. In each case, the functioning principle applied is that the impact on the material, given by two mill surfaces mobile and facing to each other, crushes the fragile material.

Therefore, in the light of what just said about the materials features, it is clear that this technique cannot be applied to plastic materials, since the impacts obtainable by means of the described mills have a low shearing component and are not able to break the plastic material causing mainly their heating.

As it is known, after heating a plastic material a further flattening of the stress-deformation curve occurs. Therefore, the plastic material is never ground, but there occurs the formation of semi-melted aggregates which block the grinding machine.

This is the reason why for plastic materials the mills known at the state of the art use a different grinding principle, and i.e. they provide locally a high shear stress by means of two tools, mobile to each other, characterized by the presence of sharp edge elements (blades) facing to each other at very little distances, substantially by sliding on each other. Stator and rotor function in these cases with relative high speeds and at reduced distances to each other (variable as a function of the desired particle size, and typically equal to about 1 mm in the common industrial usages). In this way, it is obtained the effect of concentrating mechanic action in limited areas and with very high local shear stress, so to obtain the reduction of material dimensions without an excessive heating. The mills known as blade mills or pin mills, which are used for dimension reduction of plastic material, rubbers, fibers, function according to this principle.

However, this technique cannot be applied to fragile materials, since the high shear stresses on fragile materials would cause a rapid deterioration by abrasion of the tools sharp edges. Moreover, yet modest contents of fragile materials in mixture with plastic materials cause important wear phenomena, due to the well known inclusion effect of fragile materials in the plastic matrix which multiplies the abrasive effect of the fragile portion.

Therefore, the two categories of the just described grinding machines (respectively for fragile and plastic materials) have reciprocal incompatibility when it is desired their usage for materials of the other class of Young's modulus.

Anyway, there exist whole industrial fields, as the treatment of urban waste or the treatment of material yet stored in dumps, that have to handle the need to grind mixtures containing both fragile materials and plastic materials strongly different for composition (in the following also heterogeneous mixtures for brevity), for which at the state of the art there exist solutions only to provide coarse dimension reductions (up to average dimensions of some tens of millimeters), but there are no economic and reliable technical solutions able to obtain the grinding up to powders with average particle size of about 1 millimeter. The possibility to obtain from these materials powders of little dimensions would clear the way for many uses, recycle and treatment opportunities which at the moment are precluded because not apt to treat coarse ground materials.

The problem is so strong that there have been many attempts to grind heterogeneous mixtures with new concepts of grinding, some examples of which are described in the following.

A first solution known at the state of the art (THOR - ENEA) uses as grinding elements balls of hard material, kept in strong mechanic stirring by a plowshares rotor system. It exploits the principle of impact between grinding means, which produces the desired dimension reduction, but with improved efficacy of impacts yet definitely low. In fact, the system, according to the data available in literature, consumes some thousands of kWh (300-400 kWh) for each ton of ground material.

A second solution described in the Italian application MI2011A000320 describes a mill for grinding waste comprising at least two rotors, to each one of which a plurality of chains are connected, which sweep the grinding chamber, and in which the grinding chamber is obtained by the net sum of the grinding volumes, so that the whole grinding chamber is affected by the rotation of at least a chain. In the mill according to this document, in some embodiments, there are obstacles configured to avoid the waste accumulation in places of the grinding chamber not reached by the rotating chains. Briefly, this mill uses a plurality of chains, fixed at an end to at least two rotor organs which cause their unfolding under centrifugal force. The chains slide on a stator represented by a holed sheet. For the grinding, the device uses as principle the combination of the impact with the shear stress on the material induced by the sliding. The specific consumptions for ton of material treated are lower than THOR, but not significantly, above all for matrices with significative plastic materials content. Therefore, this solution cannot be applied with success to urban waste. Moreover, the device described is subject to rapid and clear wear of the grinding elements, and so the whole costs of device management are not acceptable in an industrial concept. JP-H05-138054-A discloses another example of a grinder.

### Technical problem

So, at the state of the art there remains unsolved the problem to provide a grinding process for heterogeneous mixtures of fragile and plastic materials which overcomes the limits linked to the processes known at the state of the art, as well as to provide a device able to implement said process efficiently.

More in particular, there remains unsolved the problem to provide a process allowing to grind heterogeneous mixtures comprising both fragile materials and plastic materials, with low specific energy consumptions, low wear of the tools and high productivity per hour with respect to the volume of the grinding chamber and the applied power, as well as a device implementing such process.

Yet, there remains unsolved the problem to provide a process and relative device which allow to obtain all the just described advantages and to grind heterogeneous mixtures up to average particle sizes in the dimension order lower than 1 mm.

Yet, there remains unsolved the problem to provide a device which solves all the just described problems, and which has also modest wear and low whole management costs.

### Aim of the invention

Therefore, aim of the present invention is to provide a grinding process which overcomes the limits linked to the processes known at the state of the art, as well as a device able to implement said process efficiently.

According to another aim, the present invention provides a process which allow to grind - also up to average particle sizes in the dimension order of 1 mm - heterogeneous mixtures comprising both fragile materials and plastic materials, with low specific energy consumptions, low wear of the tools and high productivity per hour with respect to the volume of the grinding chamber, as well as a device which implements such process.

Yet, according to another aim the present invention provides a device with all the just described advantages and which has also modest wear and contained whole management costs.

### Brief description of the invention

The present invention reaches the prefixed aims by the process according to claim 1 and the device according to claim 3.

### Detailed description of the invention

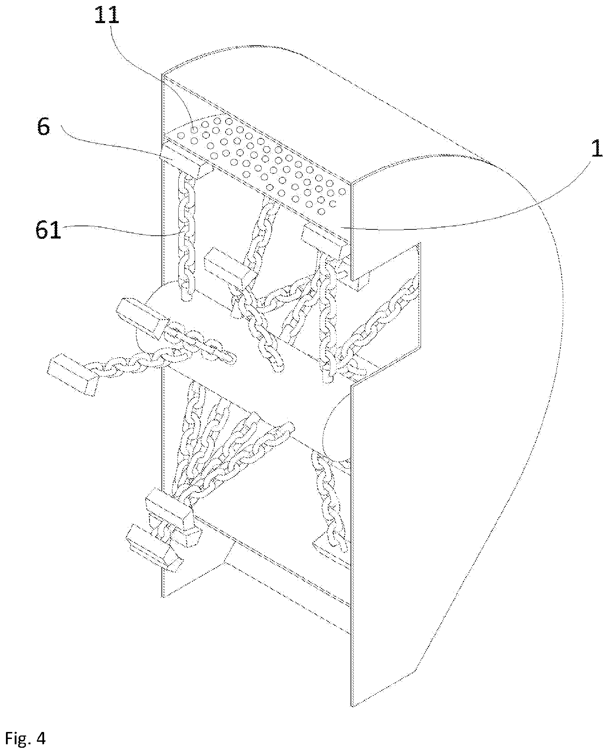

These and other advantages will be clear from the detailed description of the invention, which is described in the following with reference to the appended figures 1 to 5. In figure 1, it is shown an axonometric view in partial view of a preferred embodiment of a device implementing the process according to the invention; in figure 2 it is shown a schematic view of an actuator means and a stop means, useful to describe the functioning of the device; in figures 3 and 4 there are shown two schematic views of two embodiments comprising a plurality of actuators means fastened to relative flexible elements. In figure 5, it is shown a section view of a preferred embodiment of the device, with some possible embodiments of actuator elements and stop means highlighted.

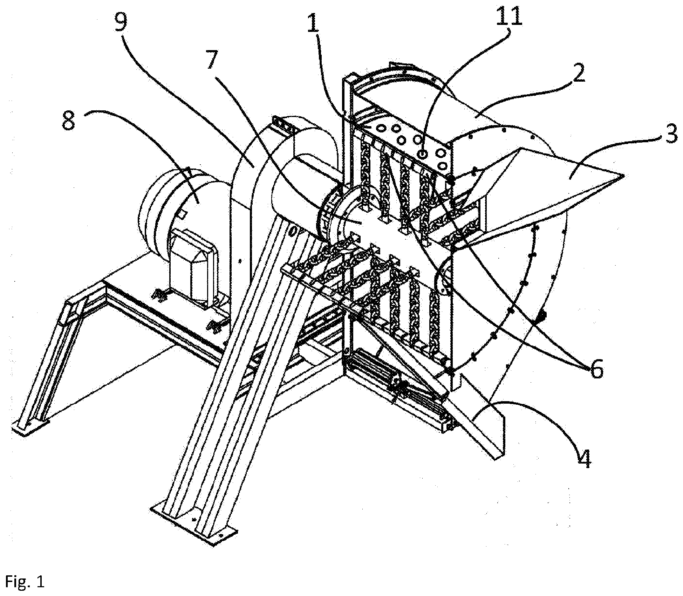

With reference to the appended figure 1, the device comprises a cylindrically shaped inner holed drum (1), and an outer case (2) enclosing said drum. The holed drum (1) is provided, on its own cylindrical shell, with a plurality of holes (11) which put the inside of the drum (1) in communication with the space contained between the same and the outer case (2). Therefore, said holes (11) define the maximum particle size of the ground material which can be discharged by means of the discharge mouth (4). It is to be specified, for clarity, that as it is clear from geometrical consideration, from a hole of diameter "D", material with at least two dimensions lower than "D" can be moved away.

The device comprises also a charging hopper (3) configured to allow the introduction of material inside the drum (1), and a discharging mouth (4) configured to allow, preferably by gravity, the expulsion of material from the space comprised between the holed drum (1) and the case (2). It is just the case to specify that the hopper (3) and the discharging mouth (4) allow the continuous material supplying and discharging, also during the machine functioning. Preferably, the hopper (3) communicates with the central portion of the drum (1), so to reduce the possibility that the processed material is projected outside the machine by means of the charging hopper.

Inside the holed drum (1) there are provided a plurality of actuators means (6), fastened by means of flexible elements (61) to a central rotating shaft (7), moved by an engine (8) by means of suitable transmission means (9). As a way of not limiting example of the aims of the invention, said flexible elements (61) can be made up of metal cables or chains.

Preferably, said actuator means are fastened each by means of the respective flexible element (61) according to a regular arrangement of the rotating shaft (7). In a first embodiment, said actuator means are arranged aligned on more rows, the various rows being arranged angularly at equal distance (for example each one at 90°, as it is shown in figure 1); in another embodiment said actuator means are arranged according to a helicoidal assembly. Other assemblies are possible without departing from the aims of the present invention.

Thanks to their connection to the rotating shaft, when the machine is in function said actuator means (6) are radially arranged under the effect of the centrifugal force provided by the rotating shaft. Said actuator means, responsible for the kinetic energy transfer from the rotating shaft to the material mass to be ground, are configured so that, in a side view, their cumulated axial dimensions take up substantially the whole axial development of the machine.

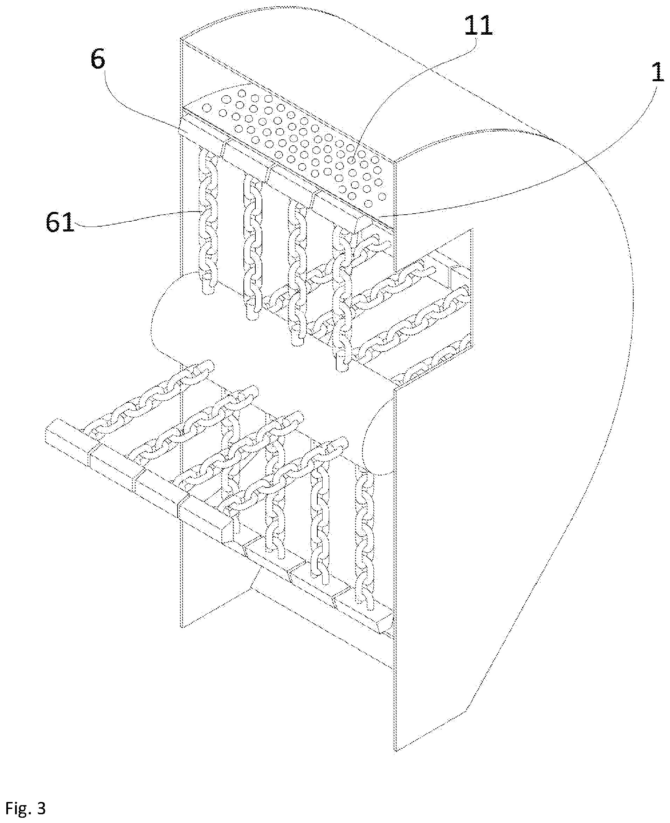

In figure 3, there are schematized a plurality of actuator means (6) fastened to relative flexible elements (61). It is immediately noted that the clear span between adjacent actuator means (6) is sensibly lower than the clear span between adjacent flexible elements (61). In a first preferred embodiment, said clear span between adjacent actuator means (6) is lower than 3 times the maximum particle size admitted for the ground material, as defined by the diameter (D) of the holes (11) on the holed drum; in a second preferred embodiment said clear span between adjacent actuator means (6) is lower than the diameter (D) of the holes (11) on the holed drum.

Considering how the system is realized, it is immediately noted that the most part of the kinetic energy provided by the rotating shaft is concentrated in the grinding elements (6), since these ones have more mass than the flexible element (6) and rotate, thanks to the radius to which they are arranged with respect to the rotating shaft (7), at sensibly higher speeds. Moreover, it was noted that the actuator elements (6) take up the whole axial development of the machine, while the flexible elements (61) take up the axial development of the machine only partially.

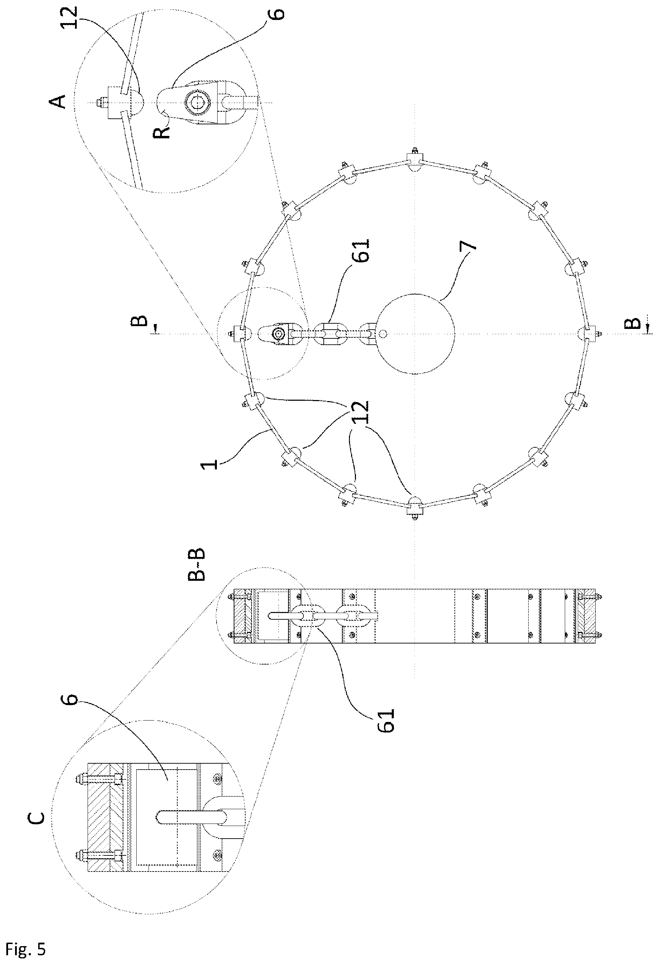

This is visible in particular from section B-B and detail "C" of figure 5, from which it is clear that the width (in axial direction) of an actuator means (6) is sensibly higher than the width (always measured in axial direction) of the relative flexible element (61). In order to avoid possible misunderstandings, it is to be specified that the word "axial" is referred to the direction of the rotating shaft axis.

These constructive measures allow the quantity of transmitted energy by the flexible elements (61) to the processed material to be modest. Since this kinetic energy is transmitted at modest speeds, not sufficient to obtain efficient impacts from the material (by efficient impacts meaning those ones able to cause the material grinding), reducing this energy allows to reduce also the energy waste, as well as to contain the processed material overheating.

The holed drum (1) comprises also, on the inner surface of its shell, a plurality of stop means (12), configured to stop against the same the material in grinding step (20).

The stop means (12) are specifically configured to cause the stop of the material in grinding step in a peripheral zone of the grinding chamber defined by the holed drum, not affected by the rotation of the flexible elements (61) nor of the actuator means (6).

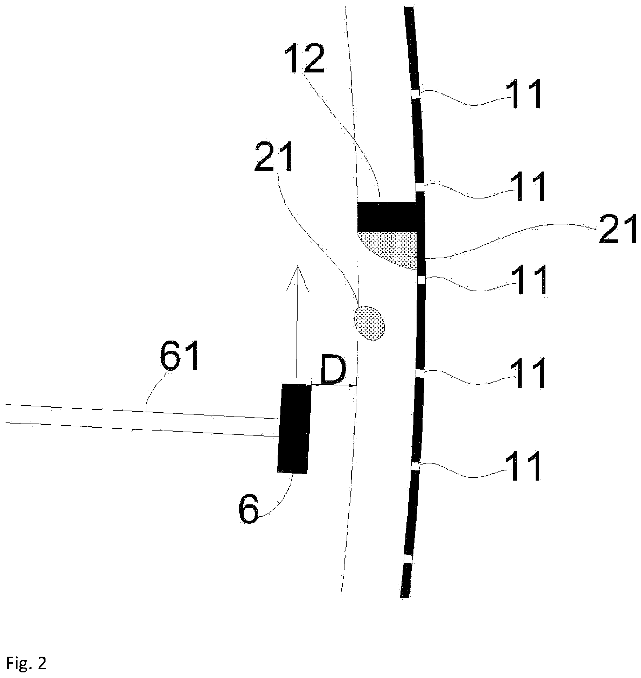

An embodiment of said stop means is shown schematically in figure 2. Another embodiment is shown in figure 5. With reference to figure 5, it is observed that actually the stop means consist of projections provided on the inner surface of the holed drum (1). The material projected outwards by the movement of the actuator means (6) meets then these projections which stop its movement.

In an embodiment shown in figure 2, said stop means are realized by fastening in radial direction pins to the inner surface of the holed drum.

In another embodiment said stop means (12) are realized by application on the inner surface of the holed drum (1) of elements with convex and rounded shape, such for example semi-spheres, spherical caps, semi-ellipsoids or similar geometries.

It is suitable to specify that, by assuming that the drum (1) is cylindrically shaped, the zone not affected by the rotation of the actuator means (6) comprises the cylindrical crown, whose outer surface is defined by the drum (1) and whose thickness is given by the sum of the height of said stop means (12) and the minimum distance between said actuator means (6) and said stop means (12).

The actuator means (6) and the stop means (12) integral to the drum (1) are configured so that the actuator means (6), by rotating, are kept at a minimum distance from said stop means (12) well greater than the maximum particle size of the ground material desired, defined by the holes (11) of the drum (1).

From detail A of figure 5, it is possible to observe in detail the distance between the actuator means (6) and the stop means (12).

According to a preferred embodiment said distance is between 1.3 and 5 times the maximum diameter defined by the holes (11).

Therefore, as a way of example, it is to be specified that when the holes (11) are of dimensions equal to about 3 mm, said minimum distance between the actuator means (6) and the stop means (12) is between 4 and 15 mm.

According to another embodiment, when the holes (11) are of dimensions equal to 1 mm, said minimum distance between the actuator means (6) and the stop means (12) is between 1.5 and 5 mm, and the process allows to obtain ground material with maximum particle size equal to 1 mm and weighted average particle size between 200 and 600 µm.

In order to highlight the peculiarities of the device object of the description, it is to be specified that in all the mills known at the state of the art, grinding requires the use of two bodies in mutual movement opposed to each other at mutual distance lower than the particle size desired. This occurs or by means of a mechanism of blade type to induce shear stresses in plastic materials, or by means of a mechanism of impact type to produce impacts able to break the fragile materials.

In the mills known at the state of the art, the distance between the actuator means (6) and the stop means (12) is never kept at dimensions significantly greater than the maximum particle size desired, defined by the diameter of the discharging holes of the ground material. Indeed, by reasoning according to the logic known at the state of the art and yet described, in case of using holes of 3 mm to allow the ground material discharge, the expert in the field would implement mutual distances well lower than 3 mm between the actuator means (whether blades, hammers, balls or means of other type) and the respective stop means of the material (whether other blades, stator fixed parts or means of other type).

Moreover, in none of the grinding mills known at the state of the art there are provided specific measures to stop the ground material outside the area swept by the rotation means (i.e. flexible elements and actuators), thus subtracting the material in the peripheral zone from the direct action of the mechanic means in movement, and exposing it instead only to impacts with other particles of the mass in grinding step.

The distance between the actuator means (6) and the stop means (12) makes unnecessary sharp edges on the ones and on the other ones. Blade sharp edges are, as known, the first elements which wear in mills. The fact that the presence is not required reduces drastically the frequency and the difficulty of maintenance interventions, thus contributing together to all the other just described measures to contain the whole costs (energy and maintenance) for ton of obtained ground material.

In fact, as it is clear from detail A of figure **5****,** in a preferred embodiment the actuator means (6) have a section rounded shape in the portion facing the stop means (12). Similarly, the stop means (12) do not have sharp edges.

As a way of example, it can be said that the actuator means (6) have a connection radius (R) with length of the same dimension order as the free space between the actuator means (6) and the stop means (12).

Moreover, the possibility to realize both actuator means and stop means without sharp edges reduces the realization costs of the elements of the machine and increases the efficiency and duration of the treatments, as hardening, intended to increase the material hardness.

The just described constructive difference between the preferred embodiment and the mills known at the state of the art (or other differences described in the following) derives from the different grinding process implemented, object of the present invention as well.

The grinding process according to the invention comprises in fact the steps of:
(i) introducing in a mill or similar device a heterogeneous matrix comprising plastic materials and fragile materials of variable dimension;
(ii) applying, by suitable moving actuator means, kinetic energy to said heterogeneous matrix, by projecting the materials of the matrix at high speed against suitable fixed stop means configured to hold removably the material projected against the same in an outer region with respect to the volume affected by the movement of said actuator means;
(iii) proceeding to grinding under the effect of impacts occurring between the material projected by the actuator means and the material accumulated on said stop means;
(iv) discharging the portion of processed material reduced under a prefixed maximum diameter.

A preferred element of the just described process is that the speed of the actuator means used to provide kinetic energy to the material is between 20 and 60 m/s. Preferably, said speed is between 30 and 55 m/s, and more preferably between 40 and 50 m/s. According to tests carried out by the applicants, the use of the just described speed ranges for the actuator means allows to optimize the process productivity per hour and to reduce the energy consumption for tons of treated material.

Preferably, moreover, the process is implemented in machines that allow the continuous supply of material to be processed and the continuous discharge of the ground material.

Preferably, moreover, the mobile actuator means and the fixed stop means never reach, during the process, mutual distances lower than the maximum particle size allowed for the ground material discharge.

As it can be observed, the process implemented does not comprise any shear, squeezing or similar operation of the material between two portions of the machine implementing the process, but only the obtainment of impacts between the particles of the matrix to be ground.

For this reason, in the just described preferred embodiment, the actuator means (6) are fastened to the rotating shaft (7) by means of flexible elements (61). In this way, if during the functioning a particle of dimensions higher than the distance between the actuator means and the stop means is compressed between the two of them, it will be observed a flexion of the flexible elements (61) which will move away the actuator means (6) from the stop means (12), not compelling the machine to squeeze nor to cut the material between two parts of the same machine.

In other terms, if the impact between the material mass dragged in rotation and the mass accumulated on the stop means (12) occurs overcoming the maximum stress provided by the machine project kinematic analysis, the flexibility of the elements (61) allows the connection to move away the actuator means (6) from the maximum circumference on which they are arranged under the centrifugal force effect, thus increasing the distance between the actuators (6) and the stop means (12).

It is to be specified that with the just described process, implemented by means of a machine of the described type, high values of productivity per hour have been recorded, between 2.0 and 3.5 ton/h for each m³ of grinding chamber volume, and a low energy consumption, between 40 and 80 kWh, for each ton of treated material.

It is suitable to specify that the energy consumption expressed in kWh/ton of treated material, is always valid. The volume productivity per hour, instead, is of common usage for commercial grinding machines, and for this reason it was used as indicator also for the machine of the invention.

The machine of the invention implements a principle of power transfer principally for useful impacts concentrated at the circular cylindrical periphery of the stator drum. Therefore, it would be logical to speak about the production of ground material "for surface unit", and of capacity scale rules on the basis of the cylindrical surface of the stator drum. Anyway, the productivity per hour would be expressed according to an index not used, and practically little comprehensible, and therefore the distinctive productivity index above described remains according to the units commonly used.

The just described productivity and specific consumption values are referred to the grinding of various lots of undifferentiated urban waste, provided to the machine in form of coarse material obtained by a pre-treatment with clear span screens of 90 mm, up to obtaining a ground material with weighted average dimension of 1 mm, with the upper end of the distribution (defined by the diameter of the holes on the drum) equal to 3 mm.

As it can be easily understood, the variability of the just described values derives from the variability of the features of the mixture incoming. In particular, while the percentage of the plastic components in the mixture to be ground increases, the specific consumptions increase.

Anyway, it is to be specified that the grinding process according to the invention does not have substantial efficacy losses while reducing the maximum dimensions admitted for the ground material, except an obvious increase of specific consumptions for ton of product. Naturally, it is possible to obtain ground materials of greater particle size by increasing further the specific productivity and reducing the energy consumption. For example, in this way ground materials with maximum particle size of 5 or 10 mm can be obtained, simply by varying the dimensions of the holes on the shell of the drum (1).

Substantial element of the process according to the invention is that the energy supplied by means of the rotating shaft is transmitted mostly to the actuator elements (6). Mostly means that the kinetic energy percentage provided to the actuator means (6) with respect to the whole kinetic energy supplied to the machine is between 50 and 90%. This means that the maximum portion of the energy provided to the machine is concentrated in the peripheral zone of the machine. Since in this zone, the speeds are maximum, it is energy which can produce impacts useful to grinding (i.e. impacts after which the material crushes).

In the just described process, the portion of the energy transmitted to the solid material to be processed at low speed is extremely limited, energy which produces inefficient impacts for grinding and generates heat.

Possibly, the process according to the invention can comprise the step of adding water to the material to be ground, in order to limit the increase of temperature caused by the treatment. The need to add water or not depends on the type of material to be ground, which can comprise enough thereof yet.

The solid materials which can be treated by means of the process according to the invention comprise fragile materials characterized by a Young's modulus higher than 10⁴ MPa and lower than 10⁵ MPa, preferably in mixture with plastic and/or fibrous materials with Young's modulus lower than 10⁴ MPa.

Aa a way of not limiting example, there can be treated mixtures containing one or more of the following materials: metals (as for example aluminum), organic materials (biomasses of various nature, wood), urban solid waste from undifferentiated collection, urban waste from differentiated collection (for example the plastic fraction, glass), rubbers.

It is the case to specify that in the industrial reality, many materials defined "rubbers" are compounds very rich of mineral charges, and components with Young's modulus higher than 10⁴ MPa and lower than 10⁵ MPa can exceed 30% of the composition.

Therefore, the term "mixed materials" is to be meant not only under the effect of features of product heterogeneity but also in the sense of base chemical composition.

Finally, the present invention provides a grinding process with low energy consumption for heterogeneous matrices, and the obtainment of fine particle sizes which is so able to make many techniques of today not convenient waste treatment competitive, since it allows:
- to increase the heap density of the ground material (increase from 50% to 100%) with respect to the incoming coarse material, so to reduce the number of vehicles needed for waste transport in the logistic chain and the consequent environmental pollution;
- to improve the efficiency of waste product separation technologies, as the ballistic separation and the aeraulic sorting, thus increasing the portion of the recycled material for reusage;
- to reduce the emissions of the waste combustion technologies for energy production.

## Claims

1. Process for grinding heterogeneous matrices comprising fragile materials and plastic materials, configured to maximize the impact percentage between materials of said matrix and materials of said matrix and actuator means of the mill implementing the process, which occur at high momentum and so are useful to crush the material and not only to heat it,
comprising the steps of:
(i) introducing a heterogeneous matrix comprising plastic materials and fragile materials of variable dimension in a mill or similar device provided with a plurality of actuator means (6) fastened by means of flexible elements (61) to a central rotating shaft (7) positioned inside a holed drum (1) provided with holes (11) on its outer surface;
(ii) applying, by rotating said actuator means (6), kinetic energy to said heterogeneous matrix, by projecting the materials of said matrix at high speed against suitable fixed stop means (12) provided on the inner surface of said holed drum (1) and configured so to hold removably the material projected against the same in an outer region with respect to the volume affected by the movement of said actuator means,
(iii) discharging, by means of said holes (11) provided on said holed drum (1), the portion of processed material reduced under a prefixed maximum diameter defined by diameter (D) of said holes (11),
**characterized in that**
said actuator means (6) and said fixed stop means (12) never reach, during the process, mutual distances equal or lower than the dimension of the maximum particle size allowed for the ground material discharge, defined by the diameter (D) of said holes (11) on the holed drum, and, therefore, the grinding occurs under the effect of the impacts occurring between the material projected by the actuator means and the material accumulated on said stop means.

2. Process according to claim 2, **characterized in that** said mobile actuator means and said fixed stop means never reach, during the process, mutual distances lower than three times the maximum particle size allowed for the ground material discharge.

3. Device for grinding heterogeneous matrices comprising both fragile materials and plastic materials configured to carry out the process according to any one of the preceding claims, comprising:
- a holed drum (1) provided with holes (11) on its outer surface;
- a plurality of actuators (6) positioned inside said holed drum (1), fastened by means of respective flexible elements (61) to a central rotating shaft (7),
wherein said holed drum (1) comprises also, on its inner surface, a plurality of stop means (12), configured to stop the material projected against the same by said actuator means,
said stop means (12) being configured to cause the stop of material in grinding step in a peripheral area of said holed drum, not affected by rotation of said flexible elements (61) nor of said actuator means (6),
**characterized in that**
said actuator means (6) being configured to be kept, during their rotation around said shaft (7) at a minimum distance from said stop means (12) higher than the diameter of said holes (11) provided on said drum (1).

4. Device according to claim 3, **characterized in that** said actuator means (6) are configured to be kept, during their rotation around said shaft (7) at a minimum distance from said stop means (12) higher than three times the diameter of said holes (11) provided on said drum (1).

5. Device according to claim 3 or 4, **characterized in that** said actuator means are configured so that, in a side view, their cumulated axial dimensions take up substantially the whole axial development of the machine.

6. Device according to claim 5, **characterized in that** in axial direction, the clear span between adjacent actuator means (6) is lower than the clear span between adjacent flexible elements (61).

7. Device according to claim 6, **characterized in that** said clear span between adjacent actuator means (6) is lower than 3 times the diameter (D) of said holes (11) on said holed drum (1).

8. Device according to claim 7, **characterized in that** said clear span between adjacent actuator means (6) is lower than the diameter (D) of said holes (11) on the holed drum (1).

9. Device according to any one of claims 4 to 11, **characterized in that** said flexible elements (61) comprise metal cables or chains.

10. Device according to any one of claims 3 to 9, further comprising:
- an outer case (2) enclosing said drum (1), so that said holes (11) put the inside of said drum (1) in communication with the space contained between the same and the outer case (2);
- a charging hopper (3) configured to allow the introduction of material to be ground inside said drum (1);
- a discharge mouth (4) configured to allow the expulsion of the material from the space comprised between said holed drum (1) and said case (2).

11. Device according to any one of claims 3 to 10, **characterized in that** said actuator means (6) fastened to said rotating shaft (7) are arranged aligned in a plurality of rows, said rows being arranged angularly at equal distance.

## Patentansprüche

1. Verfahren zum Mahlen heterogener Matrizen aus spröden und plastischen Materialien, das so konfiguriert ist, dass der Aufprall-Prozentsatz zwischen Materialien der Matrix und Materialien der Matrix und Aktuatoren der Mühle, die das Verfahren implementieren, maximiert wird, was mit hoher Geschwindigkeit erfolgt und ist daher zum Mahlen des Materials und nicht nur zu dessen Erwärmung geeignet, umfassend folgende Schritte:
(i) Einführen einer heterogenen Matrix aus plastischen Materialien und spröden Materialien unterschiedlicher Größe in einer Mühle oder in einer ähnlichen Vorrichtung, die mit mehreren Aktuatoren (6) ausgestattet ist und durch flexible Elemente (61) mit einer zentralen, rotierenden Welle (7) befestigt ist und sich in einer perforierten Trommel (1) mit Löchern (11) an ihrer Außenfläche befindet;
(ii) Ausüben einer kinetischen Energie der heterogenen Matrix durch Drehung der Aktuatoren (6), wobei das Material der Matrix wird mit hoher Geschwindigkeit gegen geeignete, feststehende Anschläge (12) an der Innenfläche der perforierten Trommel (1) geschleudert, die so konfiguriert sind, so konfiguriert, dass das Material, das in einem äußeren Bereich in Bezug auf das von der Bewegung des Aktuators beeinflusste Volumen gegen diesen projiziert wird, abnehmbar gehalten werden kann ;
(iii) Ablassen durch die Löcher (11) an der hohlen Trommel (1) des Anteils des verarbeiteten Materials, der auf einen vorgegebenen maximalen Durchmesser reduziert ist und durch den Durchmesser (D) der Löcher (11) definiert ist,
**dadurch gekennzeichnet, dass** die Aktuatoren (6) und die feststehende Anschläge (12) während des Prozesses niemals mutuelle Abstande erreichen, die kleiner oder gleich der maximal zulässigen Korngröße für den Austrag des Mahlguts sind, das durch den Durchmesser (D) der Löcher (11) auf der perforierten Trommel definiert, und wobei das Mahlen daher durch die Kollision des vom Betätigungselement geschleuderten Materials mit dem an den Anschlägen angesammelten Material erfolgt.

2. Verfahren nach Anspruch 2, **dadurch gekennzeichnet, dass** die bewegliche Aktuatoren und die feststehende Anschläge während des Prozesses niemals mutuelle Abstande erreichen, die kleiner als Dreifache der maximal zulässigen Partikelgröße für den Austrag des Mahlguts ist.

3. Vorrichtung zum Mahlen heterogener Matrizen, die sowohl spröde als auch kunststoffhaltige Materialien umfassen, die konfiguriert ist zur Durchführung des Prozesses nach einem der vorhergehenden Ansprüche, umfassend:
- eine gelochte Trommel (1) mit Löchern (11) auf ihrer Außenfläche;
- eine Vielzahl von Aktuatoren (6), die im Inneren der gelochten Trommel (1) angeordnet sind und mittels entsprechende flexible Elemente (61) an einer zentralen rotierende Welle (7) befestigt sind,
wobei die gelochte Trommel (1) an ihrer Innenfläche außerdem mehrere Anschläge (12) aufweist, die konfiguriert sind um das von den Aktuatoren gegen dieselben geschleuderte Material zu stoppen,
wobei die Anschläge (12) so konfiguriert sind, dass sie das Material während des Mahlvorgangs in einem vom Drehen der flexiblen Elemente (61) und der Aktuatoren (6) unbeeinflussten Randbereich der gelochten Trommel stoppen, und die keiner Umdrehung der flexiblen Elemente (61) und nicht der Aktuatoren unterworfen wird,
**dadurch gekennzeichnet, dass** die Aktuatoren (6) so konfiguriert sind, dass sie während ihrer Drehung um die Welle (7) einen Mindestabstand von den Anschlägen (12) einhalten, der größer ist als der Durchmesser der in der Trommel (1) vorgesehenen Löcher (11).

4. Vorrichtung nach Anspruch 3, **dadurch gekennzeichnet, dass** die Aktuatoren (6) so konfiguriert sind, dass sie während ihrer Drehung um die Welle (7) einen Mindestabstand von den Anschlägen (12) einhalten, der mehr als das Dreifache des Durchmessers der auf der Trommel (1) vorgesehenen Löcher (11) beträgt.

5. Vorrichtung nach Anspruch 3 oder 4, **dadurch gekennzeichnet, dass** die Aktuatoren so konfiguriert sind, dass in einer Seitenrichtung machen ihre kumulierten axialen Abmessungen im Wesentlichen die gesamte axiale Ausdehnung der Maschine aus.

6. Vorrichtung nach Anspruch 5, **dadurch gekennzeichnet, dass** in axialer Richtung ist der lichte Abstand zwischen benachbarten Aktuatoren (6) weniger als der lichte Abstand zwischen benachbarten flexiblen Elementen (61) beträgt.

7. Vorrichtung nach Anspruch 6, **dadurch gekennzeichnet, dass** der lichte Abstand zwischen benachbarten Aktuatoren (6) weniger als das Dreifache des Durchmessers (D) der Löcher (11) auf der gelochten Trommel (1) beträgt.

8. Vorrichtung nach Anspruch 7, **dadurch gekennzeichnet, dass** der lichte Abstand zwischen benachbarten Aktuatoren (6) kleiner als der Durchmesser (D) der Löcher (11) auf der gelochten Trommel (1) ist.

9. Vorrichtung nach einem der Ansprüche 4 bis 11, **dadurch gekennzeichnet, dass** die flexiblen Elemente (61) Metallseile oder -ketten umfassen.

10. Vorrichtung nach einem der Ansprüche 3 bis 9, ferner umfassend:
- ein Außengehäuse (2), das die Trommel (1) umschließt, sodass die Löcher (11) das Innere der Trommel (1) mit dem Raum zwischen dieser und dem Außengehäuse (2) verbinden;
- einen Einfülltrichter (3), der so konfiguriert ist, dass er das Einbringen von zu mahlenden Materials in die Trommel (1) ermöglicht;
- eine Auslassöffnung (4), die so konfiguriert ist, um das Ausbringen des Materials aus dem Raum zwischen der gelochten Trommel (1) und dem Gehäuse (2) zu erlauben.

11. Vorrichtung nach einem der Ansprüche 3 bis 10, **dadurch gekennzeichnet, dass** die an der rotierenden Welle (7) befestigten Aktuatoren (6) in mehreren Reihen ausgerichtet sind, wobei die Reihen in gleichem Winkelabstand angeordnet sind.

## Revendications

1. Procédé de broyage de matrices hétérogènes comprenant des matériaux fragiles et des matériaux plastiques, configuré pour maximiser le pourcentage d'impact entre les matériaux de ladite matrice et les matériaux de ladite matrice et les moyens d'actionnement du broyeur mettant en œuvre le procédé, qui se produisent à grande vitesse et sont donc utiles pour broyer le matériau et non seulement pour le chauffer, comprenant les étapes suivantes :
(i) introduction d'une matrice hétérogène comprenant des matériaux plastiques et des matériaux fragiles de dimension variable dans un broyeur ou un dispositif similaire muni d'une pluralité de moyens d'actionnement (6) fixés au moyen d'éléments flexibles (61) à un arbre rotatif central (7) positionné à l'intérieur d'un tambour perforé (1) muni de trous (11) sur sa surface extérieure;
(ii) appliquer, par rotation des moyens d'actionnement (6), de l'énergie cinétique à ladite matrice hétérogène, en projetant les matériaux de ladite matrice à grande vitesse contre des butées fixes appropriées (12) disposées sur la surface intérieure dudit tambour perforé (1) et configurées de manière à retenir de façon amovible le matériau projeté contre celui-ci dans une zone extérieure par rapport au volume concerné par le mouvement des moyens d'actionnement,
(iii) décharger, au moyen des trous (11) prévus sur ledit tambour perforé (1), la portion de matériau traité réduite à un diamètre maximal prédéfini défini par le diamètre (D) desdits trous (11),
**caractérisé en ce que** lesdits moyens d'actionnement (6) et lesdits moyens d'actionnement fixes (12) n'atteignent jamais, pendant le processus, des distances mutuelles égales ou inférieures à la dimension de la taille maximale des particules autorisée pour la décharge du matériau broyé, définie par le diamètre (D) desdits trous (11) sur le tambour perforé, et, par conséquent, le broyage s'effectue sous l'effet des impacts se produisant entre le matériau projeté par les moyens d'actionnement et le matériau accumulé sur lesdits moyens d'arrêt.

2. Procédé selon la revendication 2, **caractérisé en ce que** lesdits moyens d'actionnement mobiles et lesdits moyens d'arrêt fixes n'atteignent jamais, pendant le procédé, des distances mutuelles inférieures à trois fois la taille maximale des particules autorisée pour l'évacuation du matériau broyé.

3. Dispositif de broyage de matrices hétérogènes comprenant à la fois des matériaux fragiles et des matériaux plastiques, configuré pour mettre en œuvre le procédé selon l'une quelconque des revendications précédentes, comprenant :
- un tambour perforé (1) muni de trous (11) sur sa surface extérieure ;
- une pluralité de moyens d'actionnement (6) positionnés à l'intérieur dudit tambour perforé (1), fixés au moyen d'éléments flexibles respectifs (61) à un arbre rotatif central (7),
dans lequel ledit tambour perforé (1) comprend également, sur sa surface intérieure, une pluralité de moyens d'arrêt (12), configurés pour arrêter le matériau projeté contre celui-ci par lesdits moyens d'actionnement,
lesdits moyens d'arrêt (12) étant configurés pour provoquer l'arrêt du matériau lors de l'étape de broyage dans une zone périphérique dudit tambour perforé, non affectée par une rotation desdits éléments flexibles (61) ni par celle desdits moyens d'actionnement (6),
**caractérisé en ce que**
lesdits moyens d'actionnement (6) sont configurés pour être maintenus, lors de leur rotation autour dudit arbre (7), à une distance minimale desdites moyens d'arrêt (12) supérieure au diamètre desdits trous (11) pratiqués dans ledit tambour (1).

4. Dispositif selon la revendication 3, **caractérisé en ce que** lesdits moyens d'actionnement (6) sont configurés pour être maintenus, lors de leur rotation autour dudit arbre (7), à une distance minimale desdits moyens d'arrêt (12) supérieure à trois fois le diamètre desdits trous (11) pratiqués sur ledit tambour (1).

5. Dispositif selon la revendication 3 ou 4, **caractérisé en ce que** lesdits moyens d'actionnement sont configurés de telle sorte que, en vue latérale, leurs dimensions axiales cumulées occupent sensiblement la totalité du développement axial de la machine.

6. Dispositif selon la revendication 5, **caractérisé en ce que**, dans le sens axial, l'écartement libre entre moyens d'actionnement (6) adjacents est inférieur à l'écartement libre entre éléments flexibles (61) adjacents.

7. Dispositif selon la revendication 6, **caractérisé en ce que** ledit écartement libre entre moyens d'actionnement (6) adjacents est inférieur à 3 fois le diamètre (D) desdits trous (11) pratiqués sur ledit tambour perforé (1).

8. Dispositif selon la revendication 7, **caractérisé en ce que** l'écartement libre entre les moyens d'actionnement adjacents (6) est inférieure au diamètre (D) des trous (11) sur le tambour perforé (1).

9. Dispositif selon l'une quelconque des revendications 4 à 11, **caractérisé en ce que** les éléments flexibles (61) sont constitués de câbles métalliques ou de chaînes.

10. Dispositif selon l'une quelconque des revendications 3 à 9, comprenant en outre :
- un boîtier extérieur (2) renfermant ledit tambour (1), de sorte que lesdits trous (11) mettent en communication l'intérieur dudit tambour (1) avec l'espace situé entre celui-ci et le boîtier extérieur (2) ;
- une trémie de chargement (3) configurée pour permettre l'introduction du matériau à broyer dans ledit tambour (1) ;
- un orifice d'évacuation (4) configuré pour permettre l'expulsion du matériau de l'espace situé entre ledit tambour perforé (1) et ledit boîtier (2).

11. Dispositif selon l'une quelconque des revendications 3 à 10, **caractérisé en ce que** lesdits moyens d'actionnement (6) fixés audit arbre rotatif (7) sont disposés alignés sur plusieurs rangées, lesdites rangées étant arrangées angulairement à égale distance.
